# EUROPÄISCHE PATENTSCHRIFT

(11) **EP 2 387 261 B1**
(45) Veröffentlichungstag und Bekanntmachung des Hinweises auf die Patenterteilung: **13.01.2016**
(21) Anmeldenummer: 11164790.5
(22) Anmeldetag: 04.05.2011
(51) Int. Cl.: H04W 8/26, H04L 12/24, H04W 88/04

(54) **Bereitstellung einer Ende-zu-Ende-Verbindung von einer Endeinheit in ein Netz**
Provision of an end-to-end connection from a terminal to a network
Préparation d'une connexion de bout en bout d'un terminal à un réseau

(30) Priorität: 12.05.2010 DE 102010028974
(43) Veröffentlichungstag der Anmeldung: 16.11.2011
(73) Patentinhaber: Vodafone Holding GmbH, 40213 Düsseldorf (DE)
(72) Erfinder: Meyer, Ullrich, 64319 Pfungstadt (DE)
(74) Vertreter: Jostarndt, Hans-Dieter

(56) Entgegenhaltungen:
- US-A1- 2003 174 714
- US-A1- 2006 239 266
- US-A1- 2008 151 906

## Beschreibung

Die Erfindung befasst sich mit der Bereitstellung einer Ende-zu-Ende-Verbindung zwischen einer Endeinheit und einem Netz. Insbesondere betrifft die Erfindung ein Verfahren und eine zur Durchführung des Verfahrens geeignete Vorrichtung zum Bereitstellen wenigstens einer paketorientierten Ende-zu-Ende-Verbindung von einer Endeinheit in ein weiteres Netz über wenigstens eine Verbindung in einem Mobilfunknetz, wobei ein Einrichtender Verbindung eine Zuordnung einer Adresse zur Adressierung von Datenpaketen an die Endeinheit umfasst.

Mobilfunknetze umfassen üblicherweise ein Kernnetz und ein mit dem Kernnetz verbundenes Zugangsnetz, welches die Funkübertragungstechnik enthält und über das Endgeräte auf das Kernnetz zugreifen. Das Kernnetz kann mit einem weiteren Netz verbunden sein, das als Kommunikations- bzw. Datennetz, wie etwa das Internet, ausgestaltet ist und/oder mit einem weiteren Netz eines Telekommunikationsanbieters, in dem sich Netzwerkeinheiten befinden, welche bestimmte Dienste des Mobilfunknetzes, wie etwa einen Voice-over-IP(VolP)-Dienst bereitstellen.

Zur paketorientierten Datenübertragung wird üblicherweise eine so genannte virtuelle oder logische Verbindung zwischen einem Endgerät und einer Netzwerkeinheit des Kernnetzes aufgebaut, um Datenpakete zwischen dem Netzwerk und dem Endgerät auszutauschen. Der Übertragungspfad basiert in der Regel auf dem Internet Protocol (IP) und beinhaltet die Zuordnung einer Adresse, insbesondere einer IP-Adresse zu dem Endgerät, so dass im Kernnetz oder den verbundenen Netzen Datenpakete an das Endgerät adressiert werden können.

Über die Netzeinheit des Kernnetzes wird diese logische Verbindung mit Verbindungen in die mit dem Kernnetz verbundenen Netze verknüpft. Auf diese Weise lassen sich Ende-zu-Ende-Verbindungen zwischen dem Endgerät und Netzwerkeinheiten in den mit dem Kernnetz verbundenen Netzen herstellen. Die logische Verbindung ist dabei als Trägerverbindung (Bearer) für die Ende-zu-Ende-Verbindung ausgestaltet und ist in der Regel ihrerseits aus mehreren einzelnen Trägerverbindungen zwischen einzelnen Netzwerkeinheiten im Kernnetz und im Zugangsnetz zusammengesetzt.

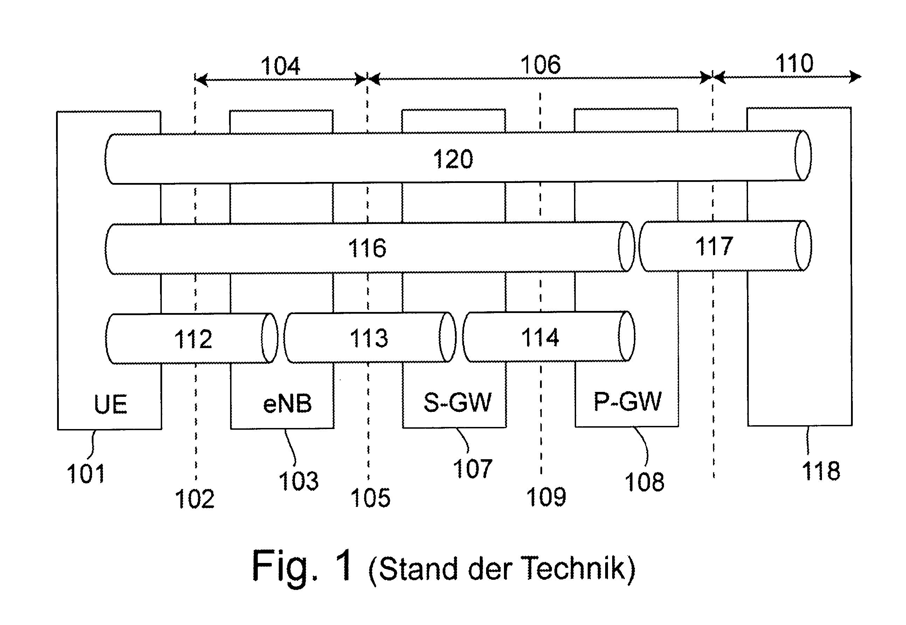

In Figur 1 ist in einer schematischen Darstellung ein entsprechendes hierarchisches Verbindungsmodell für ein Mobilfunknetz nach den LTE/SAE-Spezifikationen des 3rd Generation Partnership Project (3GPP) dargestellt, welches auch als Mobilfunknetz der vierten Generation (4G-Netz) bezeichnet wird (LTE: Long-Term Evolution; SAE: System Architecture Evolation).

Wie in der Figur gezeigt, ist ein Endgerät 101 in einem solchen Netzwerk über die Luftschnittstelle 102 mit einem als eNodeB (eNB) bezeichneten Zugangspunkt 103 des LTE-Zugangsnetzes 104 verbunden. Der Zugangspunkt 103 ist über eine Schnittstelle 105, die als S1-Schnittstelle bezeichnet wird, mit einem Gatewaysystem des Kernnetzes 106 verbunden, das als SAE-Gateway ausgestaltet ist. Dieses umfasst einen Eingangs-Gatewayeinheit 107, den Serving Gateway (S-GW), und eine Ausgangs-Gatewayeinheit 108, den Packet Data Network Gateway (P-GW). Die beiden Gatewayeinheiten 107, 108 sind über die S5/S8 Schnittstelle 109 miteinander verbinden. Die Ausgangs-Gatewayeinheit 108 verbindet das Kernnetz 106 über eine oder mehrere Schnittstellen mit einem oder mehreren externen Netzen 110, die Anwendungen bzw. Dienste bereitstellen, auf die mittels des Endgeräts 101 zugegriffen werden kann und von denen beispielhaft ein Netz 106 in Figur 1 dargestellt ist.

Über die zuvor genannten Schnittstellen werden jeweils Verbindungen zwischen den einzelnen Netzwerkeinheiten hergestellt, die der unteren Hierarchieschicht zugeordnet sind. Diese umfasst die über Luftschnittstelle 102 hergestellte Funkverbindung (Radio Bearer) 112 zwischen dem Endgerät 101 und dem Zugangspunkt 103. Ferner umfasst die untere Schicht die S1-Verbindung (S1 Bearer) 113 zwischen dem Zugangspunkt 103 und der Eingangs-Gatewayeinheit 107 sowie die S5/S8-Verbindung (S5/S8 Bearer) 114 zwischen der Eingangs-Gatewayeinheit 107 und der Ausgangs-Gatewayeinheit 108.

Über die zuvor genannten Verbindungen wird auf einer zweiten Hierarchieebene die logische Verbindung 116 vom Endgerät 101 in das Kernnetz 106 zwischen dem Endgerät 101 und der Ausgangs-Gatewayeinheit 108 eingerichtet. Die logische Verbindung 116 wird auch als EPS Bearer bezeichnet und ist insbesondere durch die Zuordnung einer IP-Adresse zu dem Endgerät 101 und durch eine bestimmte Dienstgüte (Quality of Service - QoS) charakterisiert. Die Dienstgüte wird von allen Verbindungen 112, 113, 114 der unteren Schicht gewährleistet, die zur Einrichtung der logischen Verbindung 116 miteinander verknüpft sind. Darüber hinaus umfasst die zweite Ebene eine IP-basierte Verbindung (External Bearer) 117 zwischen dem Kernnetz 106 bzw. der Ausgangs-Gatewayeinheit 108 und einer Einheit 118 im externen Netz 110.

Unter Verwendung der Verbindungen 116, 117 der zweiten Ebene wird in der dritten Ebene die Ende-zu-Ende-Verbindung 120 bereitgestellt, welche den Datenaustausch zwischen dem Endgerät 101 und der Einheit 118 in dem externen Netz 110 ermöglicht.

Bei dem Modell terminieren sowohl die Funkverbindung 112, für deren Herstellung eine die erforderliche Funktechnik enthaltende Einrichtung benötigt wird, als auch die logische Verbindung 116 der zweiten Schicht und die Ende-zu-Ende-Verbindung 120 im Endgerät 101. Um Anwendungen eine Kommunikation mit einer Einheit 118 im externen Netz 110 über die Ende-zu-Ende-Verbindung 120 zu ermöglichen, stellt das Endgerät 101 proprietäre Funktionen bereit, die auf der dritten Schicht des zuvor erläuterten Schichtenmodells operieren. Standardisierte Schnittstellen für den (externen) Zugriff auf die Ende-zu-Ende-Verbindung 120 sind indes nicht vorgesehen.

Hierdurch ergibt sich insbesondere der Nachteil, das weitere externe Geräte, die mit dem die Funktechnik enthaltenden Endgerät 101 verbunden sind, bzw. in diesen Geräten ausgeführten Anwendungen nicht ohne weiteres auf die Ende-zu-Ende-Verbindung 120 zugreifen können. Hierzu muss entweder eine (nicht-standardisierte) direkte Schnittstelle zwischen dem externen Gerät und dem Endgerät 101 geschaffen werden, oder das Endgerät 101 müsste zusammen mit dem weiteren Gerät in ein weiteres Netzwerk integriert werden, in dem das Endgerät 101 Funktionen für den Zugriff auf die Ende-zu-Ende-Verbindung 120 bereitstellt.

Im letzteren Fall, würde dem weiteren Gerät eine zusätzliche eigene IP-Adresse zugeordnet und das Endgerät 101 würde die Datenpakete der dritten Schicht, die über die Ende-zu-Ende-Verbindung 120 übertragen werden, insbesondere entweder in weitere Datenpakte einbringen müssen, welche dann versendet werden, oder es würde in den Datenpaketen die IP-Adresse des weiteren Geräts durch die eigene Adresse ersetzen müssen, um die Datenpakete weiter zu senden. Dies liegt darin begründet, dass das Mobilfunknetz Datenpakete lediglich an die von ihm vergebene IP-Adresse des Endgeräts 101 versendet. Eingehende Datenpakete für das weitere Gerät würden entsprechend weiteren, an das Endgerät 101 adressierten Datenpaketen entnommen oder wären mit der IP-Adresse des Endgeräts 101 adressiert, die dieses durch die IP-Adresse des weiteren Geräts ersetzen müsste.

Sowohl die Schaffung einer direkten Schnittstelle für den Zugriff auf die Ende-zu-Ende-Datenverbindung 120 als auch die Einrichtung eines weiteren Netzes mit dem Endgerät 101 und dem weiteren Gerät sind mit einem hohen Realisierungsaufwand verbunden. Zudem würde die letztgenannte Lösung insbesondere bei Verwendung von zusätzlichen IP-Datenpaketen zur Aufnahme der zwischen dem weiteren Gerät und dem externen Netz ausgetauschten Datenpakete zu einer Vermehrung von Daten in den über das Mobilfunknetz übertragenen IP-Datenpaketen führen. Ein weiterer Nachteil besteht darin, dass vorhandene Funktionen des weiteren Geräts für den Zugriff auf eine IP-basierte Ende-zu-Ende-Datenverbindung 120 bei Schaffung der direkten Schnittstelle nicht genutzt bzw. bei Einrichtung eines weiteren Netzes zusätzlich im Endgerät 101 implementiert werden müssen.

Die US 2006/0239266 A1 beschreibt ein Verfahren und eine Vorrichtung zur Bereitstellung von drahtlosen Datendiensten für ein TE2-Gerät. Von einem drahtlosen Gerät wird eine IP-Adresse, die von einem Mobilfunknetz vergeben wird, an das TE2-Gerät weitergereicht. Die Weiterleitungen von Datenpaketen durch das drahtlose Gerät erfolgt durch ein Standard-IP-Routing oder durch ein Bridging zwischen Schnittstellen des drahtlosen Geräts und des TE2-Geräts.

Aus der US 2003/0174714 A1 geht eine Einrichtung hervor, die eine Bridge zur Herstellung einer PPP-basierten Verbindungen zwischen einem Weiterverkehrsnetz (WAN) und einem Nutzerendgerät ausbildet. Die Einrichtung ist dazu eingerichtet, dem Nutzerendgerät eine ihr zugeordnete globale IP-Adresse zuzuweisen.

Es ist eine Aufgabe der vorliegenden Erfindung, den Zugriff auf eine Ende-zu-Ende-Datenverbindung, die über eine logische Verbindung in einem Mobilfunknetz hergestellt wird, für Geräte zu vereinfachen, die nicht direkt auf die Luftschnittstelle des Mobilfunknetzes zugreifen.

Die Aufgabe wird gelöst durch ein Verfahren mit den Merkmalen des Anspruchs 1, durch eine Vorrichtung mit den Merkmalen des Anspruchs 11 und durch ein System mit dem Merkmalen des Anspruchs 12. Ausgestaltungen des Verfahrens und der Vorrichtung sind in den abhängigen Ansprüchen angegeben.

Gemäß einem ersten Aspekt der Erfindung wird ein Verfahren der eingangs genannten Art vorgeschlagen, bei dem ein mit dem Mobilfunknetz über eine Luftschnittstelle verbundenes Modem die Adresse an die Endeinheit übergibt und vom Mobilfunknetz empfangene Datenpakete der Ende-zu-Ende-Verbindung unter Zuordnung zu der Verbindung an die Endeinheit weiterleitet.

Gemäß einem weiteren Aspekt der Erfindung wird eine Vorrichtung der eingangs genannten Art bereitgestellt, die über eine Luftschnittstelle mit dem Mobilfunknetz verbindbar ist und dazu ausgestaltet ist, die Adresse an die Endeinheit zu übergeben und vom Mobilfunknetz empfangene Datenpakete der Ende-zu-Ende-Verbindung unter Zuordnung zu der Verbindung an die Endeinheit weiterzuleiten.

Die in dem Mobilfunknetz eingerichtete Verbindung ist insbesondere als eine Trägerverbindung (Bearer) ausgestaltet, über welche die die Ende-zu-Ende-Verbindung hergestellt wird. Die Trägerverbindung kann ihrerseits aus einzelnen verknüpften Trägerverbindungen zusammengesetzt sein.

Die Erfindung beinhaltet die Idee, die Ende-zu-Ende-Verbindung über das Modem zu der Endeinheit zu führen, so dass die Ende-zu-Ende-Verbindung nicht im Modem sondern in der Endeinheit terminiert. Dies wird insbesondere dadurch erreicht, dass die von dem Mobilfunknetz vergebene Adresse von dem Modem an die Endeinheit weitergegeben wird. Dem Modem selbst wird indes keine Adresse zugeordnet, die zur Adressierung des Modems verwendet wird. Das Modem arbeitet auf der Ebene des verwendeten Paketdatenprotokolls vorzugsweise transparent. Dabei kann das Modem die Datenpakete insbesondere unverändert weiterleiten. Bei dem verwendeten Paketdatenprotokoll handelt es sich in einer Ausgestaltung um das IP und bei der Adresse, die zur Adressierung von Datenpaketen verwendet wird, um eine IP-Adresse.

Um die Übermittlung von Datenpaketen über die Ende-zu-Ende-Verbindung in das weitere Netz zu ermöglichen, sieht eine Ausgestaltung des Verfahrens und der Vorrichtung vor, dass das Modem Datenpakete, die von der Endeinrichtung unter Zuordnung zu der Verbindung gesendet werden, empfängt und über die Verbindung weiterleitet. Aufgrund der Zuordnung zu der Verbindung ermittelt das Modem dabei vorzugsweise die Verbindung, über welche die Datenpakete an das Mobilfunknetz weitergleitet werden.

Die Zuordnung der Datenpakete zu der Verbindung wird anhand einer Kennung vorgenommen, die mit den Datenpaketen verknüpft wird, und in dem Modem in Zuordnung zu der Verbindung gespeichert ist. Vorteilhaft kann hierdurch eine der Verbindung in dem Mobilfunknetz zugeordnete logische Verbindung über die Verbindung zwischen dem Modem und der Endeinheit hergestellt werden. Insbesondere kann eine Virtual Local Area Network (VLAN)-Verbindung eingerichtet werden, um die Datenpakete zwischen dem Modem und der Endeinrichtung zu übertragen. Hierbei entspricht die Kennung einer so genannten VLAN-ID.

Die Kennung wird vorzugsweise nicht in die Datenpakete eingebracht, und die Datenpakete werden vorzugsweise von dem Modem auch nicht in anderer Weise verändert, um die Kennung zuzuordnen. Funktionen zur Verarbeitung der Datenpakete brauchen daher im Modem nicht implementiert zu werden. In einer Ausführungsform des Verfahrens und der Vorrichtung ist vorgesehen, dass die Datenpakete innerhalb von verbindungsspezifischen Datenrahmen einer lokalen Verbindung zwischen dem Modem und der Endeinrichtung übertragen werden und die Datenrahmen mit der Kennung versehen werden. Bei dem verbindungsspezifischen Protokoll zur Übertragung von Daten zwischen dem Modem und der Endeinheit kann es sich insbesondere um das Ethernet-Protokoll handeln. Dementsprechend sind die verbindungsspezifischen Rahmen als Ethernet Frames und in der zuvor genannten Ausführungsform insbesondere als so genannte Tagged Ethernet Frames ausgestaltet.

Die Erfindung ermöglicht es, mehrere Ende-zu-Ende-Verbindung in ein oder mehrere weitere Netze über verschiedene Verbindungen innerhalb des Mobilfunknetzes bereitzustellen. Dabei ist eine Ausgestaltung des Verfahrens und der Vorrichtung dadurch gekennzeichnet, dass den Verbindungen jeweils eine eindeutige Kennung zugeordnet ist. Vorteilhaft ermöglichen die Kennungen, Datenpakete den verschiedenen Verbindungen innerhalb des Modems und/oder der Endeinheit zuordnen zu können.

Eine Weiterbildung des Verfahrens und der Vorrichtung beinhaltet, dass eine erste Ende-zu-Ende-Verbindung zur Datenübertragung in ein als Datennetz ausgestaltetes erstes weiteres Netz, insbesondere das Internet, hergestellt wird, und eine zweite Ende-zu-Ende-Verbindung zur Sprachübermittlung zu einem Voice-over-IP-Server in einem zweiten weiteren Netz. Somit wird es durch das Modem insbesondere ermöglicht, einen Datendienst für den Zugriff auf das Internet sowie einen IP-basierten Dienst für Sprachanrufe über das Mobilfunknetz bereitzustellen, wobei mittels einer von dem Modem getrennten Endeinheit dediziert und priorisiert auf die Dienste zugegriffen werden kann.

Eine weitere Ausgestaltung des Verfahrens und der Vorrichtung zeichnet sich dadurch aus, dass über die lokale Verbindung zwischen dem Modem und der Endeinheit Signalisierungsnachrichten unter Verwendung einer zugeordneten Kennung ausgetauscht werden. Anhand derartiger Signalisierungsnachrichten kann beispielsweise die IP-Adresse an die Endeinheit übergeben werden. Gleichfalls kann es der Endeinheit ermöglicht werden, das Modem zu steuern.

Vorzugsweise nimmt die Endeinheit jedoch nicht den Signalisierungsdatenaustausch mit dem Mobilfunknetz vor. Hierzu ist vorzugsweise das Modem vorgesehen, so dass insbesondere die Funktionen bzw. Protokolle für den Signalisierungsdatenaustausch in der Endeinheit nicht implementiert zu werden brauchen. Daher sieht eine Ausführungsform des Verfahrens und der Vorrichtung vor, dass ein Signalisierungsdatenaustausch, insbesondere ein Signalisierungsdatenaustausch zur Einbuchung in das Mobilfunknetz und/oder zum Aufbau der Verbindung, zwischen dem Modem und dem Mobilfunknetz durchgeführt wird, wobei an das Netzwerk gesendet Signalisierungsnachrichten in dem Modem generiert werden.

Darüber hinaus schlägt die Erfindung gemäß einem weiteren Aspekt ein System vor, welches eine Vorrichtung der hierin beschriebenen Art und die Endeinheit umfasst. Eine Ausführungsform des Systems ist dadurch gekennzeichnet, dass eine erste Ende-zu-Ende-Verbindung zur Datenübertragung von der Endeinheit in ein als Datennetz ausgestaltetes erstes weiteres Netz, insbesondere das Internet, hergestellt wird, und eine zweite Ende-zu-Ende-Verbindung zur Sprachübermittlung von der Endeinheit zu einem Voice-over-IP-Server in einem zweiten weiteren Netz. In einer weiteren Ausgestaltung kann die Endeinheit mit wenigstens einem Nutzerendgerät verbunden werden und ist dazu ausgestaltet, dem Nutzerendgerät einen Zugriff auf die erste und/oder die zweite Ende-zu-Ende-Verbindung zu ermöglichen.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines Schichtenmodells für den Aufbau eines Ende-zu-Ende-Datenübertragungsdienstes zwischen einem Endgerät und einem mit dem Mobilfunknetz verbundenen externen Netz nach dem Stand der Technik,
- Fig. 2: eine schematische Darstellung mit einem Mobilfunknetz und einem erfindungsgemäßen Modem sowie einer damit verbundenen Endeinrichtung,
- Fig. 3: eine schematische Darstellung eines Schichtenmodells für den Aufbau eines Datenübertragungspfads zwischen der Endeinrichtung und dem mit dem Mobilfunknetz verbundenen externen Netz und
- Fig. 4: eine schematische Darstellung eines Endeinrichtung, die über ein Mobilfunknetz mit zwei externen Netzen verbunden ist.

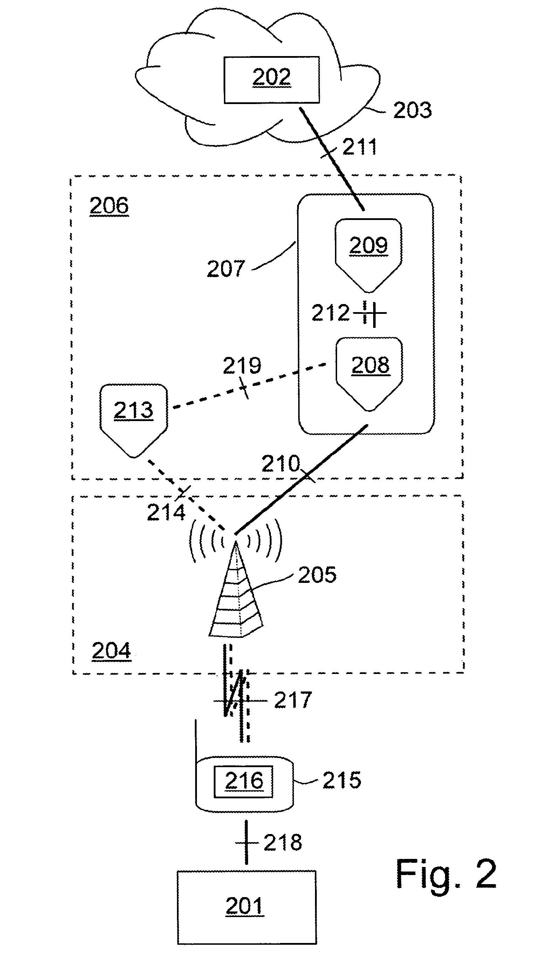

In Figur 2 sind in einer schematischen Darstellung ausgewählte Komponenten eines Mobilfunksystems dargestellt, welches in der beispielhaften Ausgestaltung ein LTE/SAE-Netz umfasst und über welches eine Endeinheit 201 mit einer Servereinheit 202 in einem externen Netz 203 verbunden ist. Das externe Netz ist als Kommunikations- und/oder Datennetz ausgebildet und basiert vorzugsweise auf dem IP. Die Servereinheit 202 stellt beispielsweise eine oder mehrere Webseiten für den Abruf durch die Endeinheit 201 bereit oder einen IP-basierten Dienst, auf den ein Nutzer über die Endeinheit 201 zugreifen kann. Bei der Endeinheit 201 handelt es sich beispielsweise um einen internetfähigen Computer. Gleichfalls kann die Endeinheit 201 jedoch auch mit weiteren Geräten verbunden sein, welche über die Endeinheit 201 mit der Servereinheit 202 kommunizieren. In diesem Fall sind die weiteren Geräte in einem privaten Netzwerk, beispielsweise einem Heim- oder Firmennetzwerk, welches von dem Mobilfunknetz getrennt ist, mit der Endeinheit 201 verbunden.

Das Mobilfunknetz umfasst ein funkbasiertes zellulares Zugangsnetz 204, in dem für jede Funkzelle jeweils ein Zugangspunkt 205 über eine Luftschnittstelle 217 drahtlosen Zugriff auf das Mobilfunknetz ermöglicht. Die Zugangspunkte 205, von denen Figur 1 lediglich einer dargestellt ist, sind mit dem Kernnetz 206 des Mobilfunknetzes verbunden und in einer Ausgestaltung als eNBs ausgeführt.

Das Kernnetz 206 umfasst ein Gatewaysystem 207, welches in der dargestellten Ausgestaltung zwei Gatewayeinheiten 208, 209 aufweist. Eine Eingangs-Gatewayeinheit 208 ist über eine Schnittstelle 210 mit mehreren Zugangspunkten 205 des Zugangsnetzes 204 verbunden und eine Ausgangs-Gatewayeinheit 209 ist über eine weitere Schnittstelle 211 mit dem externen Netz 203 verbunden. Die Eingangs-Gatewayeinheit 208 ist als Serving Gateway (S-GW) ausgestaltet und über die S1-U-Schnittstelle 210 mit den Zugangspunkten 205 verbunden. Bei der Ausgangs-Gatewayeinheit 209 handelt es sich in der dargestellten Ausgestaltung um ein Packet Data Network Gateway (P-GW), welches über eine SGi-Schnittstelle 211 an das externe Netz 203 angebunden ist. Zwischen den Gatewayeinheiten 208, 209 ist ein Schnittstelle 212 vorgesehen, die als S5/S8-Schnittstelle ausgebildet ist. Über das Gatewaysystem 207 und die zuvor genannten Schnittstellen 210, 211, 212 wird der Datenübertragungspfad für die Übertragung von Nutzdaten zu Endgeräten aufgebaut, die mit dem Zugangsnetz 204 verbunden sind. Die Nutzdatenübertragung ist in der Figur 1 durch durchgezogene Linien dargestellt.

Die Steuerung der Verbindung zwischen den Endgeräten und dem Mobilfunknetz wird durch eine Kontrolleinheit 213 vorgenommen, die als Mobility Management Entity (MME) ausgestaltet ist. Die Kontrolleinheit 213 ist über eine Schnittstelle 214, die als S1-MME-Schnittstelle ausgestaltet ist, jeweils mit mehreren Zugangspunkten 204 verbunden und über eine Schnittstelle 219, die als S11-Schnittstelle ausgebildet ist, mit dem Gatewaysystem 207, insbesondere mit der Eingangs-Gatewayeinheit 208 verbunden. Über die zuvor genannten Schnittstellen werden Signalisierungsdaten zur Verbindungssteuerung übertragen, wie in Figur 1 anhand von gestrichelten Linien angedeutet ist. Zwischen der Eingangs-Gatewayeinheit 208 und der Ausgangs-Gatewayeinheit 209 können ebenfalls Signalisierungsdaten über die Schnittselle 219 ausgetauscht werden.

Die Endeinrichtung 201 ist über ein Modem 215 mit dem Mobilfunknetz verbunden. Das Modem verfügt über ein Funkmodul 216, mit dem über die Luftschnittstelle 217 eine Verbindung zu einem Zugangspunkt 205 des Zugangsnetzes 204 aufgebaut werden kann. Zwischen dem Modem 215 und der Endeinrichtung 201 besteht eine lokale Schnittstelle 218. In einer Ausgestaltung ist die lokale Schnittstelle 218 als eine drahtgebundene Schnittstelle ausgestaltet, insbesondere als eine Ethernet-Schnittstelle. Gleichfalls kann es jedoch auch vorgesehen sein, dass die Schnittstelle 218 in anderer Weise ausgestaltet ist und etwa als eine andere drahtgebundene Schnittstelle oder als eine drahtlose Schnittstelle, beispielsweise als eine Bluetooth-Schnittstelle realisiert ist.

Um eine Verbindung zwischen der Endeinheit 201 und der Servereinheit 202 über das Mobilfunknetz aufbauen zu können, bucht sich das Modem 215 zunächst in das Mobilfunknetz ein. Dies kann beispielsweise aufgrund einer Aufforderung erfolgen, die in einer Signalisierungsnachricht von der Endeinheit 201 an das Modem 215 gesendet wird, oder wenn das Modem 215 eingeschaltet wird. Zur Durchführung der Einbuchungsprozedur (Attach Procedure) wird ein Datenaustausch zwischen dem Modem 215 und der Kontrolleinheit 213 des Netzwerks durchgeführt, der insbesondere anhand des NAS-Protokolls erfolgen kann (NAS: Non-Access Stratum). Die Einbuchungsprozedur kann insbesondere eine Authentifizierung umfassen. Hierzu werden in einer dem Fachmann an sich bekannten Weise Daten verwendet, die in einem Teilnehmeridentifikationsmodul, insbesondere einem Universal Subscriber Identification Module (USIM) gespeichert sind, welches in einer Chipkarte enthalten ist, die in das Modem 215 eingesetzt ist. Die Endeinheit 201 ist an der Durchführung der Einbuchungsprozedur vorzugsweise nicht beteiligt und braucht die zugehörigen Protokolle daher nicht zu implementieren.

Der Aufbau einer Ende-zu-Ende-Verbindung 305 zwischen der Endeinheit 201 und der Servereinheit 202 wird im Zusammenhang mit der Einbuchungsprozedur vorgenommen oder aufgrund einer separaten Anforderung, die von dem Modem 215 an die Kontrolleinheit 213 gesendet wird. Die separate Anforderung kann wiederum durch eine entsprechende Signalisierungsnachricht ausgelöst werden, die von der Endeinheit 201 an das Modem 215 gesendet. Die Übertragung der Anforderung und die nachfolgende Kommunikation mit der Kontrolleinheit 213 zur Konfiguration der Verbindung erfolgt wiederum nur zwischen Kontrolleinheit 213 und dem Modem 215 ohne Beteiligung der Endeinheit 201, so dass diese nicht über die entsprechenden Protokolle verfügen muss.

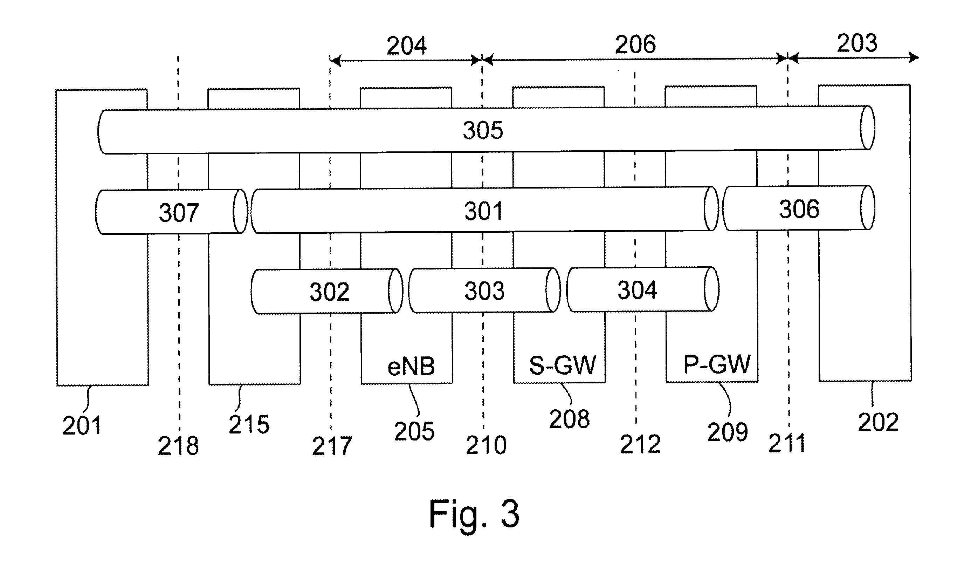

Zur Herstellung der Ende-zu-Ende-Verbindung 305 wird eine logische Verbindung 301 zwischen der Ausgangs-Gatewayeinheit 209 und dem Modem 215 aufgebaut. Die Verbindung 301, die wie eingangs bereits erläutert als EPS Bearer bezeichnet wird, ergibt sich aufgrund einer Verkettung einzelner Verbindungen 302, 303, 304 zwischen den beteiligten Einheiten 205, 207, 208 des Mobilfunknetzes und dem Modem 215, wie in Figur 3 schematisch dargestellt ist. In dem in der Figur 2 dargestellten Mobilfunknetz handelt es sich bei diesen Verbindungen um die Funkverbindung 302 zwischen dem Modem 215 und dem zuständigen Zugangspunkt 205, einer S1-Verbindung 303 zwischen dem Zugangspunkt 205 und der zugehörigen Eingangs-Gatewayeinheit 208 und einer S5/S8-Verbindung 304 zwischen der Eingangs-Gatewayeinheit 208 und der Ausgangs-Gatewayeinheit 209. Der Aufbau der einzelnen Verbindung 302, 303, 304 und der logischen Verbindung 301 erfolgt in der Regel gemeinsam.

Über die logische Verbindung 301 wird die Ende-zu-Ende-Verbindung 305 zwischen der Endeinheit 201 und der Servereinheit 202 auf der Grundlage des IP hergestellt, d.h., Datenpakete, insbesondere IP-Datenpakete, werden von der Endeinheit 201 an die Servereinheit 202 übertragen und umgekehrt. Innerhalb der einzelnen Verbindungen 302, 303, 304 zwischen den Netzwerkeinheiten 205, 207, 208 werden die Datenpakete über verschiedene Kommunikationsprotokolle übertragen. Hierbei handelt es sich um Protokolle der Schicht 1 (physikalische Schicht) und der Schicht 2 (Sicherungsschicht) des OSI-Referenzmodells, die dem Fachmann an sich bekannt sind. Zwischen der Ausgangs-Gatewayeinheit 209 und der Servereinheit 202 erfolgt der Datenaustausch innerhalb der Ende-zu-Ende-Verbindung 305 über eine IP-basierte Verbindung 306, die auch als External Bearer bezeichnet wird und dem Fachmann ebenfalls an sich bekannt ist.

Der logischen Verbindung 301 wird netzwerkseitig eine bestimmte Dienstgüte (QoS) zugeordnet. Hierdurch werden beispielsweise eine maximale und eine minimale bzw. garantierte Bitrate für die Datenübertragung über die logische Verbindung 301 festgelegt sowie eine Priorität, welche die logische Verbindung 301 im Verhältnis zu anderen Verbindungen bei einem hohen Verbindungsaufkommen besitzen soll. Die Dienstgüte kann bei der Anforderung der Datenverbindung von dem Modem 215 spezifiziert werden. Dabei ist in einer Ausgestaltung vorgesehen, dass die Endeinrichtung 201 die gewünschte oder erforderliche Dienstgüte auswählt und an das Modem 215 meldet. Dies kann beispielsweise innerhalb der Signalisierungsnachricht erfolgen, mit der die Endeinrichtung 201 das Modem 215 anweist, den Verbindungsaufbau anzufordern. Gleichfalls kann es jedoch vorgesehen sein, dass die Dienstgüte netzwerkseitig vorgegeben wird.

Darüber hinaus wird der logischen Verbindung 301 bei ihrer Einrichtung eine IP-Adresse zugeordnet, welche dazu verwendet wird, Datenpakete an das Modem 215 bzw. die Endeinrichtung 201 zu adressieren. Diese wird bei der Einrichtung der logischen Verbindung 301 dem Modem 215 mitgeteilt. Das Modem 215 gibt die empfangene IP-Adresse jedoch an die Endeinheit 201 weiter, welche die IP-Adresse in ihre IP-Konfiguration übernimmt. Dies bedeutet auch, dass die Endeinrichtung 201 unter Angabe dieser IP-Adresse an die Servereinheit 202 versendet. Dem Modem 215 selbst wird indes keine eigene IP-Adresse zugeordnet. Hierdurch wird erreicht, dass die Ende-zu-Ende-Verbindung 305 zu der Servereinheit 202 nicht in dem Modem 215 terminiert wird, sondern in der Endeinheit 201.

Die Übergabe der IP-Adresse an die Endeinheit 201 wird in einer Ausgestaltung durch einen DHCP-Server vorgenommen, der in dem Modem 215 enthalten ist (DHCP: Dynamic Host Configuration Protocol). In der Endeinheit 201 wird die IP-Konfiguration durch einen DHCP-Client vorgenommen, der die IP-Adresse von dem DHCP-Server des Modems 215 entgegennimmt. Neben der IP-Adresse übergibt der das Modem 215 und insbesondere der enthaltene DHCP-Server weitere Parameter, die der logischen Verbindung 301 zugeordnet sind an die Endeinheit 210, wie etwa den so genannten Default Gateway und/oder die Adresse des zu verwendenden Domain Name Servers (DNS).

Zwischen dem Modem 215 und der Endeinheit 201 erfolgt der Datenaustausch über eine lokale Verbindung 307 die über die lokale Schnittstelle 218 realisiert wird. Über diese Verbindung werden sowohl die Signalisierungsnachrichten gesendet als auch die IP-Datenpakete der Ende-zu-Ende-Verbindung 305. Somit ergibt sich insgesamt das in Figur 3 gezeigt Bild, in dem die bekannte Verbindungsarchtiektur des Mobilfunknetzes durch die lokale Verbindung 307 zwischen dem Modem 215 und der Endeinrichtung 201 ergänzt wird.

In einer Ausgestaltung wird die lokale Verbindung 307 durch ein so genanntes Virtual Local Area Network (VLAN) implementiert. Die der Ende-zu-Ende-Verbindung 305 zugeordneten Datenpakete werden in dieser Ausgestaltung innerhalb der verbindungsspezifischen Rahmen der lokalen Verbindung 307 mit einer eindeutigen Kennung versehen. Bei Verwendung einer Ethernet-Schnittstelle werden also mit der Kennung versehene Ethernet-Rahmen (Tagged Ethernet Frames) für den Datenaustausch zwischen dem Modem 215 und der Endeinheit 201 verwendet.

In der gleichen Weise können Signalisierungsnachrichten von der Endeinheit 201 an das Modem 215 gesendet werden und umgekehrt. Für die Übertragung der Signalisierungsnachrichten werden verbindungsspezifische Rahmen verwendet, die mit einer einheitlichen Kennung versehen sind, welche sich von der Kennung der Rahmen mit Datenpaketen der Ende-zu-Ende-Verbindung 305 unterscheidet.

Innerhalb des Modems 215 ist eine Tabelle mit Zuordnungen für die verwendeten Kennungen hinterlegt, die nachfolgend auch als VLAN-IDs bezeichnet werden. Die VLAN-ID, die der Ende-zu-Ende-Verbindung 305 zu der Servereinheit 202 zugeordnet ist, wird anhand der Tabelle der logischen Verbindung 301 zugeordnet. Zur Identifizierung der logischen Verbindung 301 können durch das Mobilfunknetz vergebene Identifikationscodes verwendet werden. Die Zuordnung zwischen der VLAN-ID und der logischen Verbindung 301 kann von dem Modem erzeugt und in der Tabelle hinterlegt werden, wenn die logische Verbindung 301 eingerichtet wird. Eine weitere Zuordnung in der Tabelle identifiziert die Signalisierungsnachrichten anhand ihrer VLAN-ID.

In der Endeinheit 201 ist eine Tabelle gespeichert, die es ermöglicht, Daten, die innerhalb der für die lokale Verbindung 307 spezifischen Rahmen empfangen werden, der Ende-zu-Ende-Verbindung zuzuordnen bzw. als Signalisierungsnachrichten zu identifizieren. Die Ende-zu-Ende-Verbindung 305 kann innerhalb der Endeinheit 201 beispielsweise anhand der vom Modem 215 erhaltenen IP-Adresse identifiziert werden, die der entsprechenden VLAN-ID zugeordnet sein kann. Die Tabelle wird von Endeinheit 201 auch beim Versenden von Daten verwendet. Handelt es sich um an die Servereinheit 202 zu übermittelnde Datenpakete der Ende-zu-Ende-Verbindung 305, so werden diese innerhalb von Rahmen an das Modem 215 gesendet, welche mit der zu dieser Verbindung gehöhrenden VLAN-ID versehen sind, die anhand der Tabelle ermittelt werden kann. Entsprechend werden Signalisierungsnachrichten von der Endeinheit 201 in Rahmen an das Modem 215 gesendet, welche mit der den Signalisierungsnachrichten zugeordneten VLAN-ID versehen sind.

Wenn das Modem 215 ein von der Servereinheit 202 gesendetes Datenpaket über die logische Verbindung 301 empfängt, identifiziert es zunächst die logische Verbindung 301 Dann ermittelt das Modem 215 die der logischen Verbindung 301 zugeordnete VLAN-ID und übermittelt das Datenpaket in einem verbindungsspezifischen Rahmen, der mit der VLAN-ID versehen ist, an die Endeinheit 201. Die Endeinheit 201 ordnet das Datenpaket aufgrund der VLAN-ID der Ende-zu-Ende-Verbindung 305 zu der Servereinheit 202 zu und verarbeitet das Datenpaket entsprechend.

Analog kann das Modem 215 eine Signalisierungsnachricht in einem verbindungsspezifischen Rahmen an das Endgerät 201 senden, welcher mit der den Signalisierungsnachrichten zugeordneten VLAN-ID versehen ist. Anhand dieser VLAN-ID erkennt das Endgerät 201, dass es sich um eine Signalisierungsnachricht handelt und führt diese der entsprechenden Verarbeitung zu.

Empfängt das Modem 215 über die lokale Verbindung 307 einen Rahmen von der Endeinheit 201, dann vergleicht es zunächst die enthaltene VLAN-ID mit der in dem Modem 215 gespeicherten Tabelle. Wenn es sich hierbei um die VLAN-ID handelt, die den Signalisierungsnachrichten zugeordnet ist, wird der Inhalt des Rahmens von dem Modem 215 als Signalisierungsnachricht behandelt. Diese Signalisierungsnachrichten werden vorzugsweise nicht an das Mobilfunknetz weitergeleitet, sondern führen zum Aufruf von Funktionen des Modems 215. Insbesondere kann die Endeinrichtung 201 auf diese Weise erreichen, dass das Modem 215 bestimmte Anforderungen an das Mobilfunknetz sendet, wie zuvor bereits beispielhaft für die Anforderung zum Aufbau einer Datenverbindung in das externe Netz 203 und für die Anforderung einer bestimmten Dienstgüte der Verbindung beschrieben.

Handelt es sich um die VLAN-ID, die der logischen Verbindung 301 zugeordnet ist, dann übergibt das Modem 215 das in dem Rahmen enthaltene Datenpaket an die logische Verbindung 301 bzw. die Funkverbindung 302. Die Übertragung des Datenpakets über die Funkverbindung 302 erfolgt unter Verwendung der für diese Verbindung vorgesehenen Protokolle, die auch in dem Modem 215 implementiert sind. Die Endeinheit 105 benötigt diese Protokolle demgegenüber nicht, um Daten über das Mobilfunknetz übertragen zu können.

Wie sich aus der vorangegangenen Erläuterung der Funktionsweise des Modems 215 ergibt, werden IP-Datenpakete von dem Modem 215 lediglich weitergeleitet, ohne dass sie verändert werden. Ebenso wenig ist es erforderlich, dass das Modem die von der Endeinheit 201 erhaltenen IP-Datenpakete in weitere IP-Pakete einbringt, um sie über das Mobilfunknetz zu senden. Das Modem 215 arbeitet somit nicht auf der Ebene des IP-Protokolls, sondern auf den darunterliegenden Ebenen, insbesondere auf der physikalischen Schicht und der Sicherungsschicht. Hierdurch kann das Modem 215 einfacher realisiert werden, und der so genannte IP-Overhead, d.h. das zusätzlich zu den Nutzdaten auftretende Datenvolumen von IP-Paketen, kann reduziert werden.

In der zuvor beschriebenen Weise können darüber hinaus auch mehrere Ende-zu-Ende-Verbindungen 305, die über verschiedene logische Verbindungen 301 eingerichtet werden, über das Modem 215 in der Endeinrichtung 201 terminiert werden. Die Einrichtung mehrerer logischer Verbindungen 301 über das Mobilfunknetz ermöglicht es insbesondere, gleichzeitig Ende-zu-Ende-Verbindungen 305 in verschiedene externe Netze 203 aufzubauen, die mit dem Kernnetz 206 verbunden sind. Hierbei wird den Ende-zu-Ende-Verbindungen 305 in die externen Netze 203 jeweils eine logische Verbindung 301 zu dem Ausgangsgateway 209 und eine zugehörige IP-basierte Verbindung 306 in das jeweilige externe Netz 203 zugeordnet. Gleichfalls können auch über verschiedene logische Verbindungen 301 mehrere Ende-zu-Ende-Verbindungen 305 dasselbe externe Netz 203 aufgebaut werden.

Wenn mehrere logische Verbindungen 301 eingerichtet werden, übergibt das Modem 215 die zugehörigen, vom Mobilfunknetz vergebenen IP-Adressen in der zuvor beschriebenen Weise an die Endeinheit 201. Auf diese Weise werden über die logischen Verbindungen 301 mehrere Ende-zu-Ende-Verbindungen 305 zwischen der Endeinheit 201 und Servereinheiten 202 in einem oder mehreren externen Netzen 203 geschaffen, die von der Endeinheit 201 für den Datenaustausch mit den Servereinheiten 202 genutzt werden können. Das Modem 215 ordnet den einzelnen logischen Verbindungen 301 jeweils eine eindeutige VLAN-ID zu, die in Zuordnung zu der logischen Verbindung 301, wie zuvor beschrieben, in der im Modem 215 gespeicherten Tabelle hinterlegt wird. Ebenfalls werden Zuordnungen der VLAN-IDs zu den zugehörigen Ende-zu-Ende-Verbindungen 305 in der Endeinheit 201 gespeichert.

Wenn das Modem 215 Datenpakete über eine logische Verbindung 301 empfängt, leitet es diese in der bereits beschriebenen Weise unter Verwendung der dieser logischen Verbindung zugeordneten VLAN-ID an die Endeinheit 201 weiter. Anhand der verwendeten VLAN-ID kann die Endeinheit 201 die zugehörige Ende-zu-Ende-Verbindung 305 identifizieren. Um Datenpakete über eine der Ende-zu-Ende-Verbindungen 305 an das entsprechende externe Netz 203 bzw. eine Servereinheit 202 zu übermitteln, sendet die Endeinheit die Datenpakete unter Verwendung der zugehörigen VLAN-ID an das Modem 215. Diese identifiziert anhand der VLAN-ID unter Rückgriff auf die Tabelle die logische Verbindung 301 und leitet die Datenpakete über die ermittelte logische Verbindung 301 weiter.

Den unterschiedlichen logischen Verbindungen 301 können verschiedene Dienstgüten zugeordnet sein. Dies kann insbesondere durch unterschiedliche Verwendungszwecke bedingt sein. So kann beispielsweise einer logischen Verbindung 301 über die eine VolP-Verbindung zur Sprachübermittlung zu einer Servereinheit 202 in einem externen Netz 203 hergestellt wird, eine höhere Dienstgüte zugeordnet werden als einer Datenverbindung in ein externes Netz 203, wie etwa das Internet. Dies kann sich daraus ergeben, dass die Anforderungen an die Verbindungsqualität und die unterbrechungsfreie Verfügbarkeit bei Sprachverbindungen in der Regel höher sind als an Datenverbindungen.

Um den Dienstgüten bzw. den zugrunde liegenden Anforderungen auch bei der Übermittlung von Datenpaketen zwischen dem Modem 215 und der Endeinheit Rechnung zu tragen, ist es in einer Ausgestaltung vorgesehen, dass unterschiedliche Prioritäten für die Übertragung von Datenpaketen der einzelnen Ende-zu-Ende-Verbindungen 305 festgelegt werden. Im Falle von Kollisionen, werden Datenpakete mit einer höheren Priorität vor Datenpaketen mit einer niedrigeren Priorität über die lokale Verbindung 307 übertragen. Zudem leitet das Modem 215 Datenpakete, denen eine höhere Priorität zugeordnet ist, vor Datenpaketen mit einer niedrigeren Priorität von der lokalen Verbindung 307 zu der logischen Verbindung 301 weiter und umgekehrt.

Die Priorität wird vorzugsweise innerhalb der verbindungsspezifischen Rahmen der lokalen Verbindung 307 angegeben. Dies geschieht in einer Ausgestaltung durch Prioritätsbits, welche (zusätzlich zu der VLAN-ID) in die Rahmen eingebracht werden. Anhand der Prioritätsangaben in den Rahmen kann deren Empfänger ermitteln, mit welcher Priorität die in den Rahmen enthaltenen Datenpakete weiterzuleiten sind. Insbesondere leitet das Modem 215 Datenpakete, die innerhalb von Rahmen unter Angabe einer höheren Priorität von der Endeinheit 201 empfangen werden, vor Datenpaketen an die zugehörige logische Verbindung weiter, die unter Angabe einer niedrigeren Priorität empfangen werden.

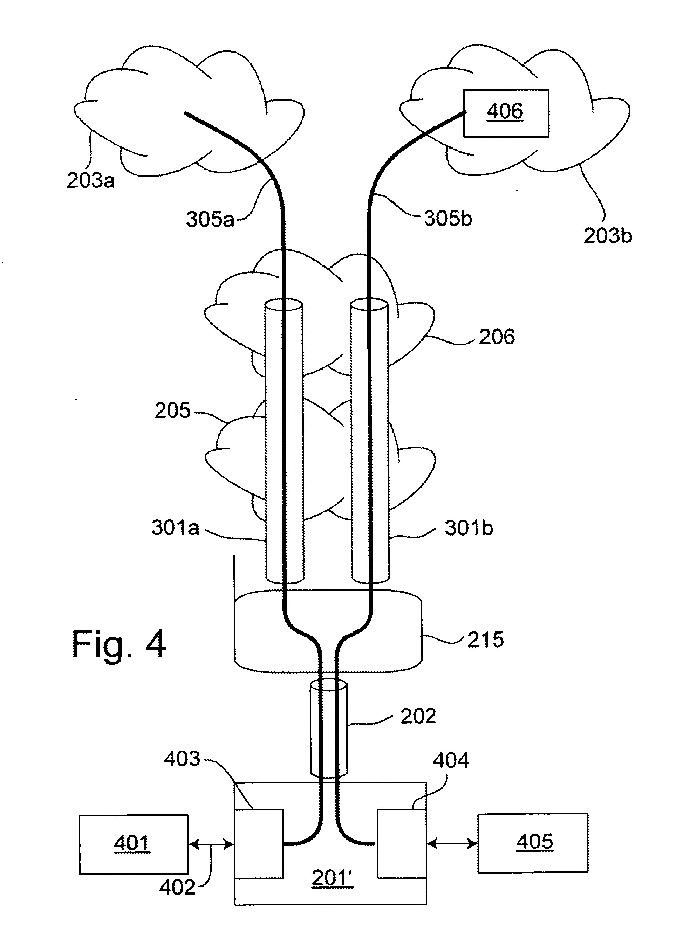

In einer Ausgestaltung, die in Figur 4 schematisch veranschaulicht ist, handelt es sich bei der Endeinheit um eine Routereinrichtung 201', die einem Nutzer den Zugriff auf mehrere Kommunikations- und Datendienste ermöglicht. Diese Dienste umfassen einen VolP-Dienst sowie einen Datendienst für den Zugriff auf ein externes Datennetz 203a, bei dem es sich insbesondere um das Internet handeln kann.

Der Zugriff auf das externe Datennetz 203a erfolgt mittels eines weiteren Geräts, insbesondere eines internetfähigen Computers 401 des Nutzers, der über eine lokale Netzwerkverbindung 402 mit einem Routingmodul 403 der Routereinrichtung 201' verbunden ist. Eine Ende-zu-Ende-Verbindung 305a zwischen der Routereinrichtung 201' und dem externen Datennetz 203a wird innerhalb des Mobilfunknetzes über eine logische Verbindung 301 a hergestellt. Für den Zugriff auf den VolP-Dienst weist die Routereinrichtung einen SIP-Client 404 auf (SIP: Session Initiation Protocol), der mit einem weiteren Gerät 405, beispielsweise einem SIP- bzw. VolP-fähigen Telefongerät, des Nutzers verbunden ist. Der SIP-Client 404 kommuniziert über eine Ende-zu-Ende-Verbindung 305b mit einem VolP-Server 406, der sich in einem als Anbieternetz 203b ausgestalteten externen Netz befindet. In dem Mobilfunknetz wird die Ende-zu-Ende-Verbindung 305b über eine logische Verbindung 301 b hergestellt. Über den VolP-Server 406 können Sprachverbindungen zu Kommunikationspartnern in einer dem Fachmann an sich bekannten Weise aufgebaut werden. Bei dem Anbieternetz 203b handelt es sich in verschiedenen Ausgestaltung um ein IP Multimedia Subsystem (IMS) oder ein Next Generation Network (NGN), welches von einem Telekommunikationsanbieter bereitgestellt und betrieben wird.

Mit dem Mobilfunknetz ist die Routereinrichtung 201' in der zuvor bereits beschriebenen Weise über das Modem 215 verbunden. Dieses übergibt die bei Einrichtung der logischen Verbindungen 305a, 305b vergebenen IP-Adressen an die Routereinrichtung 201, welche die IP-Adressen dem Routingmodul 403 und dem SIP-Client 404 zuordnet. Ferner ordnet das Modem 215 den logischen Verbindungen 305a, 305b jeweils eine VLAN-ID zu, die in der ebenfalls bereits beschriebenen Weise dazu verwendet wird, Datenpakete über die lokale Verbindung 307 zwischen dem Modem 215 und der Routereinrichtung 201' zu übertragen. Vorzugsweise ist der logischen Verbindung 305b eine höhere Dienstgüte zugeordnet als der logischen Verbindung 305a. Dementsprechend ist es vorzugsweise vorgesehen, dass der logischen Verbindung 305b zugehörige Datenpakete mit höherer Priorität über die lokale Verbindung 307 übertragen werden als der logischen Verbindung 305a zugehörige Datenpakete.

Routereinrichtungen 201' der zuvor beschrieben Art sind grundsätzlich bereits bekannt und werden zur Bereitstellung von Diensten über Festleitungsnetze, insbesondere DSL- bzw. VDSL-Netze, verwendet (DSL: Digital Subscriber Line, VDSL: Very High Speed Digital Subscriber Line). Hierbei werden die Routereinrichtung 201' durch VLAN-Verbindungen, die im Wesentlichen den in der zuvor beschriebenen Ausgestaltung verwendeten VLAN-Verbindungen entsprechen, mit einem Netz eines Telekommunikationsanbieters verbunden. Über dieses Netz werden dann Verbindungen in weitere, externe Netze hergestellt. Wie die vorangegangenen Erläuterungen zeigen, können derartige Routereinrichtung 201' mithilfe des Modems 215 in einfacher Weise mit einem Mobilfunknetz verbunden werden, so dass die im Festnetz angebotenen Dienste auch über das Mobilfunknetz bereitgestellt werden können. Dabei sind nur geringfügige Anpassungen der Gerätesoftware erforderlich.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt.

Insbesondere ist die Erfindung nicht auf die zuvor genannten LTE/SAE-Netze beschränkt. Vielmehr kann sie in analoger Weise auch in anderen Mobilfunknetzen eingesetzt werden, in denen Ende-zu-Ende-Verbindungen 305 in externe Netze 203 über logische Verbindungen 301 zu Gatewayeinrichtung des Mobilfunknetzes hergestellt werden, deren Einrichtung mit der Zuordnung einer IP-Adresse verbunden ist. So kann die Erfindung beispielsweise in GPRSbasierten Mobilfunknetzen eingesetzt werden (GPRS: General Packet Radio Service), in denen die logische Verbindung 301 als ein so genannter PDP-Kontext zu einem GGSN (Gateway GPRS Support Node) des Kernnetzes 206 aufgebaut werden.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen. In den Patentansprüchen angegebene Bezugszeichen sind nicht als Beschränkungen der eingesetzten Mittel und Schritte anzusehen.

## Patentansprüche

1. Verfahren zum Bereitstellen wenigstens einer paketorientierten Ende-zu-Ende-Verbindung (305) von einer Endeinheit (201) in ein weiteres Netz (203) über wenigstens eine Verbindung (301) in einem Mobilfunknetz (204, 206), wobei ein Einrichten der Verbindung (301) eine Zuordnung einer Adresse zur Adressierung von Datenpaketen an die Endeinheit (201) umfasst und wobei ein mit dem Mobilfunknetz (204, 206) über eine Luftschnittstelle (217) verbundenes Modem (215) die Adresse an die Endeinheit (201) übergibt und vom Mobilfunknetz (204, 206) empfangene Datenpakete der Ende-zu-Ende-Verbindung (305) unter Zuordnung zu der Verbindung (301) an die Endeinheit (201) weiterleitet, **dadurch gekennzeichnet, dass** dem Modem (215) keine Adresse zugeordnet wird, so dass die Ende-zu-Ende-Verbindung (305) nicht im Modem (215) terminiert, wobei die Zuordnung der Datenpakete zu der Verbindung (301) anhand einer von der Adresse verschiedenen Kennung vorgenommen wird, die mit den Datenpaketen verknüpft wird und in dem Modem (215) in Zuordnung zu der Verbindung (301) gespeichert ist.

2. Verfahren nach Anspruch 1, wobei das Modem (215) Datenpakete, die von der Endeinheit (201) unter Zuordnung zu der Verbindung (301) gesendet werden, empfängt und über die Verbindung (301) weiterleitet.

3. Verfahren nach einem der vorangegangenen Ansprüche, wobei die Datenpakete innerhalb von verbindungsspezifischen Datenrahmen einer lokalen Verbindung (307) zwischen dem Modem (215) und der Endeinheit (201) übertragen werden und die Datenrahmen mit der Kennung versehen werden.

4. Verfahren nach einem der vorangegangenen Ansprüche, wobei mehrere Ende-zu-Ende-Verbindungen (305) über jeweils eine Verbindung (301) in dem Mobilfunknetz (204, 206) bereitgestellt werden und den Verbindungen (301) jeweils eine eindeutige Kennung zugeordnet ist.

5. Verfahren nach einem der vorangegangenen Ansprüche, wobei eine erste Ende-zu-Ende-Verbindung (305a) zur Datenübertragung in ein als Datennetz (203a) ausgestaltetes erstes weiteres Netz (203a), insbesondere das Internet, hergestellt wird, und eine zweite Ende-zu-Ende-Verbindung (305b) zur Sprachübermittlung zu einem Voice-over-IP-Server (406) in einem zweiten weiteren Netz (203b).

6. Verfahren nach einem der vorangegangenen Ansprüche, wobei über die lokale Verbindung (307) zwischen dem Modem (215) und der Endeinheit (201) Signalisierungsnachrichten unter Verwendung einer zugeordneten Kennung ausgetauscht werden.

7. Verfahren nach einem der vorangegangenen Ansprüche, wobei ein Signalisierungsdatenaustausch, insbesondere ein Signalisierungsdatenaustausch zur Einbuchung in das Mobilfunknetz (204, 206) und/oder zum Aufbau der Verbindung (301), zwischen dem Modem (215) und dem Mobilfunknetz (204, 206) erfolgt, und wobei an das Mobilfunknetz (204, 206) gesendet Signalisierungsnachrichten in dem Modem (215) generiert werden.

8. Verfahren nach einem der vorangegangenen Ansprüche, wobei es sich bei der Adresse um eine IP-Adresse handelt.

9. Verfahren nach einem der vorangegangenen Ansprüche, wobei es sich bei der Verbindung (301) um eine logische Verbindung in ein Kernnetz (206) des Mobilfunknetzes (204, 206), insbesondere um einen EPS-Bearer, handelt.

10. Verfahren nach einem der vorangegangenen Ansprüche, wobei die lokale Verbindung (307) als Ethernet-Verbindung ausgestaltet ist.

11. Vorrichtung (215) zum Bereitstellen wenigstens einer paketorientierten Ende-zu-Ende-Verbindung (305) von einer Endeinheit (201) in ein weiteres Netz (203) über wenigstens eine Verbindung (301) in einem Mobilfunknetz (204, 206), wobei ein Einrichten der Verbindung (301) eine Zuordnung einer Adresse zur Adressierung von Datenpaketen an die Endeinheit (201) umfasst und wobei die Vorrichtung über eine Luftschnittstelle (217) mit dem Mobilfunknetz (204, 206) verbindbar ist und dazu ausgestaltet ist, die Adresse an die Endeinheit (201) zu übergeben und vom Mobilfunknetz (204, 206) empfangene Datenpakete der Ende-zu-Ende-Verbindung (305) unter Zuordnung zu der Verbindung (301) an die Endeinheit (201) weiterzuleiten, **dadurch gekennzeichnet, dass** der Vorrichtung (215) keine Adresse zugeordnet ist, so dass die Ende-zu-Ende-Verbindung (305) nicht in der Vorrichtung (215) terminiert, wobei die Zuordnung der Datenpakete zu der Verbindung (301) anhand einer von der Adresse verschiedenen Kennung vorgenommen wird, die mit den Datenpaketen verknüpft wird und in der Vorrichtung (215) in Zuordnung zu der Verbindung (301) gespeichert ist.

12. System, umfassend eine Vorrichtung (215) nach Anspruch 11 und die Endeinheit (201).

13. System nach Anspruch 12, wobei eine erste Ende-zu-Ende-Verbindung (305a) zur Datenübertragung von der Endeinheit (201') in ein als Datennetz (203a) ausgestaltetes erstes weiteres Netz, insbesondere das Internet, hergestellt wird, und eine zweite Ende-zu-Ende-Verbindung (305b) zur Sprachübermittlung von der Endeinheit (201') zu einem Voiceover-IP-Server (406) in einem zweiten weiteren Netz (203b).

14. System nach Anspruch 13, wobei die Endeinheit (201') mit wenigstens einem Nutzerendgerät (401, 405) verbunden werden kann und dazu ausgestaltet ist, dem Nutzerendgerät (401, 405) einen Zugriff auf die erste und/oder die zweite Ende-zu-Ende-Verbindung (305a, 305b) zu ermöglichen.

## Claims

1. A method for providing at least one packet-oriented end-to-end connection (305) from a terminal unit (201) to another network (203) via at least one connection (301) in a mobile telecommunications network (204, 206), a set-up of the connection (301) comprising an assignment of an address for addressing data packets to the terminal unit (201), and whereby a modem (215) that is connected to the mobile telecommunications network (204, 206) via an air interface (217) transfers the address to the terminal unit (201) and forwards data packets of the end-to-end connection (305) that have been received from the mobile telecommunications network (204, 206) to the terminal unit (201), the data packets being forwarded in an association with the connection (301), **characterized in that** no address is associated with the modem (215), so that the end-to-end connection (305) is not terminated in the modem (215), whereby the data packets are associated with the connection (301) using an identifier that is different from the address, wherein the identifier is linked to the data packets, and wherein the identifier is stored in the modem (215) in an association with the connection (301).

2. The method according to claim 1, wherein the modem (215) receives data packets sent from the terminal unit (201) in an association with the connection (301), and forwards them via the connection (301).

3. The method according to one of the preceding claims, wherein the data packets are transmitted in connection-specific data frames of a local connection (307) between the modem (215) and the terminal unit (201) and the data frames are provided with the identifier.

4. The method according to one of the preceding claims, wherein several end-to-end connections (305) are each provided via one connection (301) in the mobile telecommunications network (204, 206), and an unambiguous identifier is associated with each connection (301).

5. The method according to one of the preceding claims, wherein a first end-to-end connection (305a) is established for data transmission to a first additional network (203a) configured as a data network (203a), particularly the Internet, and a second end-to-end connection (305b) is established for speech transmission to a voice over IP server (406) in a second additional network (203b).

6. The method according to one of the preceding claims, wherein signaling messages are exchanged between the modem (215) and the terminal device (201) via the local connection (307), using an associated identifier.

7. The method according to one of the preceding claims, wherein signaling data, particularly signaling data for registering with the mobile telecommunications network (204, 206) and/or for establishing the connection (301), are exchanged between the modem (215) and the mobile telecommunications network (204, 206), and wherein signaling messages sent to the mobile telecommunications network (204, 206) are generated in the modem (215).

8. The method according to one of the preceding claims, wherein the address is an IP address.

9. The method according to one of the preceding claims, wherein the connection (301) is a logical connection to a core network (206) of the mobile telecommunications network (204, 206), particularly an EPS bearer.

10. The method according to one of the preceding claims, wherein the local connection (307) is configured as an Ethernet connection.

11. A device (215) for providing at least one packet-oriented end-to-end connection (305) from a terminal unit (201) to another network (203) via at least one connection (301) in a mobile telecommunications network (204, 206), a set-up of the connection (301) comprising an assignment of an address for addressing data packets to the terminal unit (201), and whereby the device is connectable to the mobile telecommunications network (204, 206) via an air interface (217), and the device is configured to transfer the address to the terminal unit (201) and to forward data packets of the end-to-end connection (305) that have been received from the mobile telecommunications network (204, 206) to the terminal unit (201), the data packets being forwarded in an association with the connection (301), **characterized in that** no address is associated with the device (215), so that the end-to-end connection (305) is not terminated in the device (215), whereby the data packets are associated with the connection (301) using an identifier that is different from the address, wherein the identifier is linked to the data packets, and wherein the identifier is stored in the device (215) in an association with the connection (301).

12. A system comprising a device (215) according to claim 11 and the terminal unit (201).

13. The system according to claim 12, wherein a first end-to-end connection (305a) is established for data transmission from the terminal unit (201') to a first additional network configured as a data network (203a), particularly the Internet, and a second end-to-end connection (305b) is established for speech transmission from the terminal unit (201') to a voice over IP server (406) in a second additional network (203b).

14. The system according to claim 13, wherein the terminal unit (201') can be connected to at least one user terminal device (401, 405) and it is configured so that the user terminal device (401, 405) can access the first and/or the second end-to-end connection (305a, 305b).

## Revendications

1. Procédé de fourniture d'une connexion de bout en bout (305) d'une unité terminale (201) vers un autre réseau (203) via au moins une connexion (301) dans un réseau radio mobile (204, 206), un aménagement de la connexion (301) incluant une affectation d'une adresse pour l'adressage de paquets de données à l'unité terminale (201) et un modem (215) connecté au réseau radio mobile (204, 206) via une interface aérienne (217) transférant l'adresse à l'unité terminale (201) et retransmettant des paquets de données de la connexion de bout en bout (305) reçus du réseau radio mobile (204, 206) à l'unité terminale (201) en les associant à la connexion (301), **caractérisé en ce qu'**aucune adresse n'est affectée au modem (215), de sorte que la connexion de bout en bout (305) ne se termine pas dans le modem (215), l'association des paquets de données à la connexion (301) étant opérée à l'aide d'un identifiant différent de l'adresse qui est associé aux paquets de données et est stocké dans le modem (215) tout en étant associé à la connexion (301).

2. Procédé selon la revendication 1, le modem (215) recevant des paquets de données émis par l'unité terminale (201) tout en étant associés à la connexion (301) et les retransmettant via la connexion (301).

3. Procédé selon l'une des revendications précédentes, les paquets de données étant transmis dans des trames de données, spécifiques à la connexion, d'une connexion locale (307) entre le modem (215) et l'unité terminale (201), et les trames de données étant pourvues de l'identifiant.

4. Procédé selon l'une des revendications précédentes, plusieurs connexions de bout en bout (305) étant mises à disposition via respectivement une connexion (301) dans le réseau radio mobile (204, 206) et respectivement un identifiant univoque étant associé aux connexions (301).

5. Procédé selon l'une des revendications précédentes, une première connexion de bout en bout (305a) étant établie aux fins de la transmission de données vers un premier autre réseau (203a) conçu en tant que réseau de données (203a), en particulier l'internet, et une deuxième connexion de bout en bout (305b) étant établie aux fins de la communication vocale vers un serveur Voix sur IP (406) dans un deuxième autre réseau (203b).

6. Procédé selon l'une des revendications précédentes, des messages de signalisation étant échangés via la connexion locale (307) entre le modem (215) et l'unité terminale (201) en utilisant un identifiant associé.

7. Procédé selon l'une des revendications précédentes, un échange de données de signalisation, en particulier un échange de données de signalisation pour connexion au réseau radio mobile (204, 206) et/ou pour établissement de la connexion (301), s'effectuant entre le modem (215) et le réseau radio mobile (204, 206) et des messages de signalisation envoyés au réseau radio mobile (204, 206) étant générés dans le modem (215).

8. Procédé selon l'une des revendications précédentes, l'adresse étant une adresse IP.

9. Procédé selon l'une des revendications précédentes, la connexion (301) étant une connexion logique vers un réseau d'infrastructure (206) du réseau radio mobile (204, 206), et plus particulièrement une porteuse EPS.

10. Procédé selon l'une des revendications précédentes, la connexion locale (307) se présentant sous la forme d'une connexion Ethernet.

11. Dispositif (215) pour fournir au moins une connexion de bout en bout (305) orientée paquets d'une unité terminale (201) vers un autre réseau (203) via au moins une connexion (301) dans un réseau radio mobile (204, 206), un aménagement de la connexion (301) incluant une affectation d'une adresse pour l'adressage de paquets de données à l'unité terminale (201) et le dispositif pouvant être connecté au réseau radio mobile (204, 206) via une interface aérienne (217) et étant conçu pour transférer l'adresse à l'unité terminale (201) et retransmettre des paquets de données de la connexion de bout en bout (305) reçus du réseau radio mobile (204, 206) à l'unité terminale (201) en les associant à la connexion (301), **caractérisé en ce qu'**aucune adresse n'est affectée au dispositif (215), de sorte que la connexion de bout en bout (305) ne se termine pas dans le modem (215), l'association des paquets de données à la connexion (301) étant opérée à l'aide d'un identifiant différent de l'adresse qui est associé aux paquets de données et est stocké dans le modem (215) tout en étant associé à la connexion (301).

12. Système comprenant un dispositif (215) selon la revendication 11 et l'unité terminale (201).

13. Système selon la revendication 12, une première connexion de bout en bout (305a) étant établie aux fins de la transmission de données de l'unité terminale (201') vers un premier autre réseau conçu en tant que réseau de données (203a), en particulier l'internet, et une deuxième connexion de bout en bout (305b) étant établie aux fins de la communication vocale de l'unité terminale (201') vers un serveur Voix sur IP (406) dans un deuxième autre réseau (203b).

14. Système selon la revendication 13, l'unité terminale (201') pouvant être connectée à au moins un terminal d'utilisateur (401, 405) et étant conçue pour permettre au terminal d'utilisateur (401, 405) d'accéder à la première et/ou à la deuxième connexion de bout en bout (305a, 305b).
